# EUROPEAN PATENT SPECIFICATION

(11) **EP 2 184 310 B1**
(45) Date of publication and mention of the grant of the patent: **18.05.2011**
(21) Application number: 09252548.4
(22) Date of filing: 04.11.2009
(51) Int. Cl.: C08G 77/20, C08G 77/26, C08G 77/28, C08G 77/388, C08G 77/392, C08L 83/08, B32B 25/20, B32B 27/30, C08L 29/04, C08L 101/02, C08L 101/06, C08L 101/08

(54) **Gas barrier composition and laminate**
Gassperrzusammensetzung und Laminat
Composition barrière aux gaz et stratifié

(30) Priority: 10.11.2008 JP 2008287379
(43) Date of publication of application: 12.05.2010
(73) Proprietor: Shin-Etsu Chemical Co., Ltd., Tokyo (JP)
(72) Inventor: Tsuchida, Kazuhiro, Anaaka-shi, Gunma-ken (JP)
(74) Representative: Stoner, Gerard Patrick

(56) References cited:
- EP-A- 2 093 247
- JP-A- 8 295 848
- JP-A- 10 146 929
- JP-A- 11 335 555
- JP-A- 2000 063 753

## Description

### TECHNICAL FIELD

This invention relates to a gas barrier composition, a gas barrier laminate, and a shaped article using the laminate. More particularly, it relates to a gas barrier-forming composition able to form a layer or coating having a gas barrier ability of inhibiting transmission of gases of oxygen, nitrogen, water vapor or the like, as well as transparency, moisture-proofness, impact resistance, hot water resistance, and adhesion.

### BACKGROUND

Gas barrier films having a minimized transmission rate of gases such as oxygen, nitrogen, carbon dioxide, and water vapor are used as commercial and industrial materials including packaging materials for beverage and food containers, photographic base film, magnetic tape base film, drawing film, film for capacitors and electric parts, membrane switches, touch panels, keyboards, and labels.

In the beverage and food package applications, films must meet a high level of film properties including gas barrier, transparency and flexing resistance. In the industrial applications, as the advanced technology of LC displays and organic EL displays seeks for light-weight, thin and flexible structures, efforts are made to use plastic film substrates instead of conventional glass substrates. To find use in these applications, plastic films are required to provide gas barrier properties equivalent to those of glass substrates.

In general, plastic films are endowed with gas barrier properties by several methods including (1) forming films from gas barrier materials such as ethylene-vinyl alcohol copolymers, vinylidene chloride copolymers and aromatic nylon resins, (2) laminating or coating such gas barrier materials on other film materials such as polyester resin films, (3) laminating aluminum foil on film materials, and (4) depositing metal oxides on film materials.

Of the foregoing gas barrier films, those films of ethylene-vinyl alcohol copolymers and aromatic nylon resins are less moisture proof so that their gas barrier properties degrade with an increasing humidity in the storage atmosphere. Gas barrier films of vinylidene chloride copolymers can cause environmental pollution due to inclusion of chlorine. Aluminum foil-laminated films obstruct vision of the contents in packages. Metal oxide-deposited films are less flexible so that the deposited layer tends to crack, losing gas barrier properties.

To address these problems, JP 3119113 proposes a gas barrier film comprising a coating layer of polysiloxane thereon, which is well known in the art. A gas barrier film comprising a coating layer of a hybrid polymer consisting of polysiloxane and organic polymer thereon and an organic layer of aqueous emulsion on the coating layer is described in JP-A 2002-326303 as having improved flexibility and flexing resistance. However, polysiloxane is generally oxygen transmissive, the proposed techniques are not regarded sufficient in bond and adhesion to the film substrate and the overlying resin layer. There is still room for further improvement in gas barrier and flexing resistance properties.

### Citation List

Patent Document 1: JP 3119113
Patent Document 2: JP-A 2002-326303

An aim herein is to provide new and useful compositions able to impart good or improved properties including gas barrier properties, adhesion, flexibility, flexing resistance and transparency. Other aspects of the proposals are gas barrier laminates comprising such compositions, shaped articles comprising such a laminate, and methods of making and using the above.

The inventor has found that a gas barrier layer having improved gas barrier, adhesion and flexibility can be formed from an organopolysiloxane having a triazine-dithiol radical based on a triazine skeleton which effectively develops gas barrier properties and having incorporated in the skeleton a thiol radical which is effective for adhesion to resins and metals.

The invention provides a gas barrier composition, a gas barrier laminate, and a shaped article as defined below.

In one aspect (claim 1) the invention provides
a gas barrier composition comprising (A) an organopolysiloxane having a triazine-thiol radical, such as of formula (2) below, in the molecule and (B) an organic polymer having a polar functional radical.

The gas barrier composition may comprise the reaction product of (A) the organopolysiloxane having a triazine-thiol radical in a molecule and (B) the organic polymer having a polar functional radical.

In a preferred embodiment, the polar functional radical is selected from among hydroxyl, carboxyl, amino, amide, isocyanate, mercapto, epoxy and alkoxysilyl. In a preferred embodiment, components (A) and (B) are used in a weight ratio of 10-95 : 90-5.

In a preferred embodiment, (A) the organopolysiloxane having a triazine-thiol radical in a molecule has the siloxane unit formula (1). These organopolysiloxanes are known per se from EP-A-2 093 407, earlier dated than the present patent but published after the present priority data.

(R¹R²R³SiO_{1/2})ₐ(R⁴R⁵SiO_{2/2})_{b}(R⁶SiO_{3/2})_{c}(SiO_{4/2})_{d}(O_{1/2}X). (1)

Herein X is hydrogen or C₁-C₄ alkyl, R¹ to R⁶ are each independently an optionally substituted C₁-C₂₀ alkyl or alkenyl radical or C₆-C₁₀ aromatic hydrocarbon radical, with the proviso that any one of R¹ to R⁶ contains at least one radical of the structural formula (2): 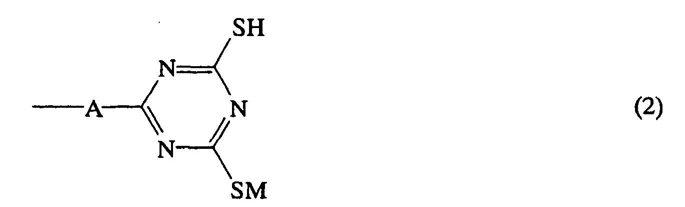 wherein M is hydrogen and/or sodium, A is a divalent organic radical having one end bonded to the triazine ring and another end bonded to a silicon atom in the polysiloxane, a is a number 0 s a < 0.8 on average, b is a number 0 ≤ b < 1 on average, c is a number 0 s c s 1 on average, d is a number 0 ≤ d < 0.4 on average, e is a number 0 s e < 0.5 on average, and a+b+c+d = 1.

In structural formula (2), the divalent organic radical -A- is preferably a divalent hydrocarbon radical which may be separated by carbonyl carbon and/or a heteroatom selected from oxygen, sulfur and nitrogen, and more preferably -CH₂CH₂CH₂NH- or -CH₂CH₂CH₂NHCH₂CH₂NH-.

In another aspect (claim 10) the invention provides a gas barrier laminate comprising a substrate and a gas barrier layer disposed thereon by coating with a gas barrier composition comprising organopolysiloxane (A) as defined above.

The gas barrier laminate may further comprise a top layer of an organic and/or inorganic polymer disposed on the gas barrier layer and/or an inorganic thin-film layer between the substrate and the gas barrier layer. Most often the substrate is a film. The film substrate is preferably selected from among polyester resins, ethylene-vinyl alcohol copolymers, vinylidene chloride copolymers, aromatic nylon resins, and ethylene-vinyl ester copolymers and saponified derivatives thereof.

Also contemplated herein (claim 16) is a shaped article comprising the gas barrier laminate.

### ADVANTAGEOUS EFFECTS

The gas barrier composition of the invention comprises as an essential component an organopolysiloxane having a triazine-thiol radical which effectively develops high gas barrier properties and tight adhesion, and a reactive radical, typically reactive silyl radical, capable of strongly bonding with a polymer having a polar functional radical. This coating composition is applied to a substrate to form a gas barrier layer which is improved in processing adhesion and bond strength to the substrate and an optional overlying layer of organic or inorganic resin. The resulting laminate develops a high level of gas barrier properties.

### FURTHER EXPLANATIONS; OPTIONS AND PREFERENCES

As used herein, the terminology "(Cₓ-C_{y})", as applied to a particular unit, such as, for example, a chemical compound or a chemical substituent group, means having a carbon atom content of from "x" carbon atoms to "y" carbon atoms per such unit.

The invention provides a gas barrier composition comprising (A) an organopolysiloxane having a triazine-thiol radical in a molecule as an essential component and (B) an organic polymer having a polar functional radical as an optional component. Where components (A) and (B) are included, they may be present in the form of the reaction product resulting from reaction of both components by suitable treatment such as heating.

While it suffices that the gas barrier composition comprises (A) an organopolysiloxane having a triazine-thiol radical in a molecule and (B) an (optional) organic polymer having a polar functional radical as primary components, various inorganic and organic additives may be contained as auxiliary components for the purpose of assisting in improving certain properties such as gas barrier, flexing resistance, substrate adhesion and transparency. Suitable additives include coupling agents such as silane coupling agents, particulate inorganic oxides such as silica and titania, curing catalysts, leveling agents, surfactants, plasticizers, defoamers, thickeners, and the like. A suitable solvent may be used to dissolve these components, and except for some limited embodiments, the composition may comprise the solvent.

One of the primary components in the gas barrier composition of the invention is an organopolysiloxane having a triazine-thiol radical. The organopolysiloxane has in its molecular structure a triazine-dithiol radical that develops high adhesion to the substrate and the overlying resin layer, while the triazine skeleton and the siloxane resin structure form a dense crosslinked structure that develops high gas barrier properties.

The organopolysiloxane typically has the siloxane unit formula (1).

(R¹R²R³SiO_{1/2})ₐ(R⁴R⁵SiO_{2/2})_{b}(R⁶SiO_{3/2})_{c}(SiO_{4/2})ₐ(O_{1/2}X)ₑ (1)

Herein X is hydrogen or C₁-C₄ alkyl. R¹ to R⁶ are each independently an optionally substituted C₁-C₂₀ alkyl or alkenyl radical or an optionally substituted C₆-C₁₀ aromatic hydrocarbon radical, typically aryl, with the proviso that any one of R¹ to R⁶ contains at least one radical of the structural formula (2): 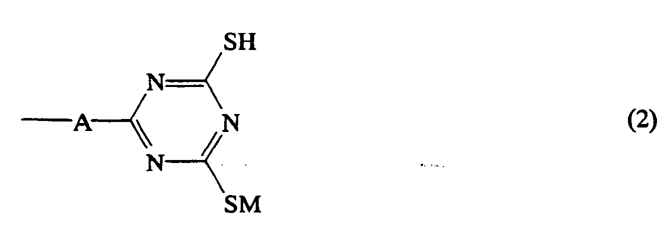 wherein M is hydrogen and/or sodium atom, A is a divalent organic radical having one end bonded to the triazine ring and another end bonded to a silicon atom in the polysiloxane. The subscript a is a number 0 ≤ a < 0.8 on average, b is a number 0 s b < 1 on average, c is a number 0 s c s 1 on average, d is a number 0 s d < 0.4 on average, e is a number 0 ≤ e < 0.5 on average, and a+b+c+d = 1.

In formula (1), suitable substituents on the alkyl, alkenyl and aromatic hydrocarbon radicals of R¹ to R⁶ include hydroxyl, carboxyl, polyether, phenyl, fluorine, chlorine, bromine, (meth)acryloxy, epoxy-containing radicals, mercapto, isocyanate, amino-functional radicals, triazinyl-thiol, perfluoroalkyl, and poly(hexafluoropropylene oxide)-containing radicals, alone or in admixture.

In formula (1), a, b, c and d are indicative of the average molar fractions of mono-, di-, tri- and tetra-functional siloxane structures, respectively, provided that the total molar amount of these siloxane structures is unity (1), and they represent compositional ratios of respective siloxane units. The subscript e is the moles of hydroxyl or hydrolyzable radicals bonded directly to silicon atoms in di- to tetra-functional siloxane units divided by the moles of Si-O units in the overall di- to tetra-functional siloxane unit formulas, and it represents a fraction of Si-OH and Si-OR in overall Si-O units. They thus satisfy a+b+c+d = 1 and 0 ≤ e < (b+c+d).

As monofunctional siloxane units (R¹R²R³SiO_{1/2}) are introduced into an organopolysiloxane resin, its molecular weight is generally reduced. Thus the range of these units is 0 ≤ a < 0.8 on average, and preferably 0 s a < 0.4 on average. As difunctional siloxane units (R⁴R⁵SiO_{2/2}) are introduced into an organopolysiloxane resin, its degree of branching is reduced so that the overall resin is reduced in modulus and increased in fluidity. Thus the range of these units is 0 ≤ b < 1 on average, and preferably 0 < b < 0.8 on average. As trifunctional siloxane units (R⁶SiO_{3/2}) are introduced into an organopolysiloxane resin, its degree of branching is generally increased so that the overall resin is increased in modulus and reduced in fluidity, perhaps leading to difficult handling. Thus the range of these units is 0 ≤ c ≤ 1 on average, and preferably 0 ≤ c ≤ 0.6 on average. As tetrafunctional siloxane units (SiO_{4/2}) are introduced into an organopolysiloxane resin, its degree of branching is significantly increased so that the overall resin is significantly increased in modulus and significantly reduced in fluidity and solubility. Thus the range of these units is 0 s d < 0.4 on average, and preferably d = 0. As hydrolyzable radical-containing siloxane units are introduced into an organopolysiloxane resin, more sites of reaction with an inorganic substrate are available, but reactive groups are left in the resin, detracting from storage stability. Thus the range of these units is 0 ≤ e < 0.5 on average, and preferably 0 s e < 0.3.

Of the silicon-bonded substituent radicals represented by R¹ to R⁶ in siloxane unit formula (1), suitable C₁-C₂₀ alkyl and alkenyl radicals which may be substituted include alkyl radicals such as methyl, ethyl, propyl, butyl, pentyl, hexyl, cyclohexyl, decyl, and dodecyl, and alkenyl radicals such as vinyl, allyl, butenyl, pentenyl, hexenyl, and cyclohexenyl. Suitable C₆-C₁₀ monovalent aromatic hydrocarbon radicals include phenyl tolyl, phenylethyl, xylyl, and naphthyl. Suitable substituents on these radicals include hydroxyl, carboxyl, polyether, phenyl, fluorine, chlorine, bromine, (meth)acryloxy, epoxy-containing radicals, mercapto, isocyanate, amino-functional radicals, triazinyl-thiol, perfluoroalkyl, and poly(hexafluoropropylene oxide)-containing radicals.

Of the foregoing radicals, any one of substituent radicals R¹ to R⁶ contains at least one organic group of the structural formula (2): 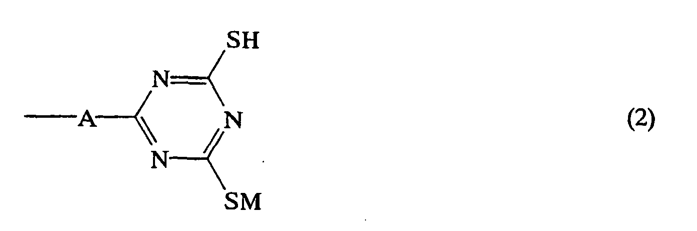 wherein M is hydrogen and/or sodium, A is a divalent organic radical having one end bonded to the triazine ring and another end bonded to a silicon atom in the polysiloxane.

With respect to the silicon-bonded hydrolyzable radical, X is hydrogen or a C₁-C₄ alkyl radical such as methyl, ethyl, n-propyl, i-propyl, n-butyl, i-butyl or t-butyl, preferably hydrogen or methyl, and more preferably hydrogen.

Typically the divalent organic radical -A- is a divalent hydrocarbon radical which may incorporate or be interrupted by carbonyl carbon and/or a heteroatom such as oxygen, sulfur or nitrogen, and preferably - CH₂CH₂CH₂NH- or CH₂CH₂CH₂NHCH₂CH₂NH-.

Another primary component is (B) an organic polymer having a polar functional radical. In case a gas barrier film formed from a coating composition comprising the organopolysiloxane having a triazine-thiol radical (A) alone is short in flexing resistance and flexibility, the organic polymer (B) is added to make up or improve these physical properties and achieve further improvements in gas barrier, adhesion, transparency and softness. Since the polar functional radicals in the molecule of the organic polymer (B) may react with functional radicals in organopolysiloxane (A) to form a hybrid polymer of siloxane-organic polymer, the organic polymer (B) is also effective in improving the gas barrier, flexing resistance, flexibility, transparency or other properties of a coating without detracting from hardness, strength and denseness.

The organic polymer (B) has a basic skeleton consisting of carbon atoms and nitrogen and/or oxygen atoms and a polar functional radical in the molecule. Examples of the polar functional radical include, but are not limited to, hydroxyl, carboxyl, amino, amide, isocyanate, mercapto, epoxy, and alkoxysilyl. Of these, hydroxyl, alkoxysilyl and amino radicals are preferred for ease of film formation and improvement in gas barrier property. One or more polar functional radicals may be contained in the molecule.

Exemplary of the organic polymer (B) are hydroxyl-containing organic polymers including polyvinyl alcohol, ethylene-vinyl alcohol copolymers, and (co)polymers of hydroxyl-containing (meth)acrylate, e.g., 2-hydroxyethyl (meth)acrylate; amino-containing organic polymers including polyalkylene imines such as polyethylene imine, polyalkyl amines such as polyallyl amine, homopolymers of amino-containing (meth)acrylates, for example, dialkylaminoalkyl (meth)acrylates such as dimethylaminoethyl (meth)acrylate and diethylaminoethyl (meth)acrylate, copolymers of amino-containing (meth)acrylates with other (meth)acrylates or (meth)acrylic acid, and polyoxyethylene alkylamines; alkoxysilyl-containing organic polymers including homopolymers of alkoxysilyl-containing (meth)acrylates such as (meth)acryloxypropylalkoxysilane, copolymers of alkoxysilyl-containing (meth)acrylates with other (meth)acrylates or (meth)acrylic acid; amide-containing organic polymers including polyacrylamide; and carboxyl-containing organic polymers including poly(meth)acrylic acid and (meth)acrylic acid copolymers. These polymers may be used alone or in admixture of two or more.

The organic polymer (B) generally has a number average molecular weight (Mn) of 250 to 200,000, preferably 250 to 100,000, and more preferably 300 to 10,000, as measured by gel permeation chromatography (GPC) versus polystyrene standards. With Mn of less than 250, a gas barrier film may be insufficient in film formability and flexibility. With Mn of more than 200,000, a gas barrier film may be insufficient in transparency and flexibility. It is noted that some organic polymers which can be used as the organic polymer (B) may have a complex structure which cannot be evaluated in terms of Mn as prescribed above, and it is not contemplated that those polymers be excluded because of the range of Mn as specified above.

In one embodiment of the invention, the gas barrier composition is characterized by optional reaction of (A) an organopolysiloxane having a triazine-thiol radical in a molecule with (B) an organic polymer having a polar functional radical. As used herein, the term "reaction" refers to both ester exchange reaction between an alkoxysilyl moiety of the organopolysiloxane (A) and a hydroxyl moiety of the organic polymer (B) and chemical reaction between a functional radical A' of the organopolysiloxane (A) and an organic functional radical of the organic polymer (B) capable of reacting with the functional group A'. The latter chemical reaction includes a reaction between epoxy and amino radicals, a reaction between (meth)acrylic and amino radicals, a reaction between (meth)acrylic and mercapto radicals, and the like. As used herein, the term "optional" refers to a case where components (A) and (B) are not subjected to reaction, and a case where non-bonding interaction is established between components (A) and (B), like a hydrogen bond by carbonyl-active hydrogen resulting from use of an amide-containing polymer, that is, a case where no apparent reaction occurs, as opposed to a case where components (A) and (B) are reacted to form a direct bond.

For reaction of (A) the organopolysiloxane having a triazine-thiol radical in a molecule with (B) the organic polymer having a polar functional radical, an organic solvent is used if desired, and the mixture is preferably kept or heated at a temperature in the range of 5 to 200°C, more preferably 25 to 150°C, and even more preferably 50 to 130°C. The use of an organic solvent ensures uniform mixing of both the components and more effective reaction. At temperatures below 5°C, a quantity of thermal energy sufficient for reaction to proceed may not be available. Temperatures in excess of 200°C may cause side reactions other than the desired reaction, and polymerization and pyrolysis of functional moieties.

Any desired organic solvents may be used herein as long as components (A) and (B) are dissolvable therein. Suitable organic solvents include alcohol solvents such as methanol, ethanol, isopropyl alcohol and butanol; aliphatic hydrocarbon solvents such as pentane, hexane and heptane; aromatic hydrocarbon solvents such as toluene and xylene; chain-like or cyclic ether solvents such as diethyl ether, cyclopentyl methyl ether, dioxane, and tetrahydrofuran; ester solvents such as ethyl acetate and butyl acetate; amide solvents such as formamide, dimethylformamide, pyrrolidone, and N-methylpyrrolidone; and ketone solvents such as acetone, methyl ethyl ketone, methyl isobutyl ketone and cyclohexanone. Inter alia, alcohol solvents are preferred, with methanol and isopropyl alcohol being more preferred.

The amounts of (A) the organopolysiloxane having a triazine-thiol radical in a molecule and (B) the organic polymer having a polar functional radical used vary over a wide range, depending on the presence or absence of other additives. Typically the amount of component (A) used is 5 to 100 wt%, preferably 10 to 95 wt%, and more preferably 15 to 90 wt% based on the total amount of components in the gas barrier composition excluding the solvent. If the amount of component (A) used is less than 5 wt%, the resulting gas barrier composition or film may lack one or more of water resistance, moisture resistance, low-temperature film formation, transparency, smoothness, mar resistance, ease of coating, substrate adhesion, heat resistance, chemical resistance, and stain resistance.

Typically the amount of component (B) used is 0 to 95 wt%, preferably 5 to 90 wt%, and more preferably 10 to 85 wt% based on the total amount of components in the gas barrier composition excluding the solvent. The minimum amount of component (B) used may be 0 wt% because it is optional. However, use of (B) the organic polymer having a polar functional radical has the effects of improving certain properties like gas barrier, adhesion, transparency and flexibility as described above, and thus, if the amount of component (B) is less than 5 wt%, such effects may not be exerted. It is to be noted that depending on the type of substrate, the gas barrier film may crack or lack one or more of water resistance, moisture resistance, transparency, smoothness, mar resistance, ease of coating, substrate adhesion, heat resistance, chemical resistance, and stain resistance. If the amount of component (B) is more than 95 wt%, the gas barrier composition or film may lack one or more of water resistance, moisture resistance, low-temperature film formation, transparency, smoothness, mar resistance, ease of coating, substrate adhesion, heat resistance, chemical resistance, and stain resistance.

The amount of the solvent used is not particularly limited. Based on the total weight of the gas barrier composition, the amount of the solvent used is typically 5 to 97 wt%, preferably 20 to 95 wt%, and more preferably 50 to 90 wt%. If the amount of solvent is less than 5 wt%, the gas barrier composition may have poor reaction stability and its viscosity may build up to interfere with uniform coating. If the amount of solvent is more than 97 wt%, the productivity in forming a film may be low and the gas barrier composition may have too low a concentration of effective components to form a film having a necessary thickness. Notably, the solvent used herein is the same as exemplified above.

In addition to (A) the organopolysiloxane, (B) the organic polymer, and the solvent, the gas barrier composition may comprise inorganic and organic additives including coupling agents such as silane coupling agents, particulate inorganic oxides such as silica and titania, curing catalysts, leveling agents, surfactants, plasticizers, defoamers, and thickeners. The amounts of such additives used are not particularly limited as long as the additives can exert their own effects and do not adversely affect the desired effects of (A) the organopolysiloxane, (B) the organic polymer, and the solvent.

The gas barrier composition is effectively used to form a gas barrier film or layer on a substrate to construct a gas barrier laminate. Typically the gas barrier film or layer may be formed by applying or coating the gas barrier composition onto the substrate. A second embodiment of the invention is a gas barrier laminate comprising a substrate and a gas barrier layer disposed thereon by coating the gas barrier composition.

The substrate used herein is typically a film. The film substrate may be selected from among polyester resins, ethylene-vinyl alcohol copolymers, vinylidene chloride copolymers, aromatic nylon resins, and ethylene-vinyl ester copolymers and saponified derivatives thereof.

The gas barrier film or layer has a dry thickness which varies over a wide range depending on the intended application and the structure of a gas barrier laminate where the film or layer is used. Thus the thickness of the film or layer may be selected in accordance with a particular application. For use as packaging materials for food and beverage containers and food packaging or wrapping films, for example, the thickness of a gas barrier film or layer is typically in the range of 0.01 to 10 µm, and preferably 0.1 to 5 µm. If the thickness is less than 0.01 µm, it may be difficult to form a uniform coating, and such a thin film may not fully develop the desired properties including gas barrier, substrate adhesion, transparency, flexibility, printability, moisture proofness, and flexing resistance. If the thickness is more than 10 µm, the film may be susceptible to cracking because of the tendency that flexing resistance deliberately declines in inverse proportion to an increasing thickness.

In a preferred embodiment, the gas barrier laminate may further comprise a top layer of an organic and/or inorganic polymer disposed on the gas barrier layer. The organic top layer may be formed of acrylic resins, vinyl acetate resins, epoxy resins, polyalkylene wax, and thermosetting polyester resins, for example. The inorganic top layer may be formed of metal oxides, typically of silicon, titanium, aluminum or similar metals, while a composite resin top layer made of a hybrid polymer of organic resin and inorganic resin may also be used. Provision of the top layer is effective for imparting flexing resistance, Gelbo flex durability, and crack resistance under expansion and contraction of film substrate during laminate processing.

The top layer has a dry thickness which varies over a wide range depending on the intended application and the structure of a gas barrier laminate. Thus the thickness of the top layer may be selected in accordance with a particular application. For use as packaging materials for food and beverage containers and food packaging or wrapping films, for example, the thickness of a top layer is typically in the range of 0.1 to 20 µm, and preferably 0.5 to 5 µm. If the thickness is less than 0.1 µm, it may be difficult to form a uniform coating, and such a thin top layer may not fully develop the desired properties including Gelbo flex durability and flexing resistance. If the thickness is more than 20 µm, the top layer has satisfactory Gelbo flex durability and flexing resistance, but may be poor in moisture proofness.

In a preferred embodiment, the gas barrier laminate may further comprise an inorganic thin-film layer between the substrate and the gas barrier layer. The inorganic thin-film layer is a barrier thin-film layer made of an inorganic oxide. It may be a single layer film or a multilayer or composite film consisting of more than one layer, each layer being formed by depositing an inorganic oxide by a suitable technique, for example, chemical vapor deposition and/or physical vapor deposition. The chemical vapor deposition (CVD) techniques include plasma-enhanced CVD, thermal CVD, and photo CVD. The physical vapor deposition (PVD) techniques include vacuum evaporation, sputtering, ion plating, and ion cluster beam techniques.

The deposited film of metal or inorganic oxide is in principle a thin film of metal oxide deposited. A deposited layer of any metal oxide may be used while suitable metals include silicon, aluminum, magnesium, calcium, potassium, tin, sodium, boron, titanium, lead, zirconium, and yttrium. Of these, such metal elements as silicon and aluminum are preferred for availability and gas barrier properties.

The deposited film of metal oxide may be simply designated as a metal oxide such as silicon oxide, aluminum oxide or magnesium oxide, which is represented by MOx (wherein M is a metal element and the value of x has a range varying with the metal element) such as SiOx, AlOx or MgOx. The value of x is in the range of 0 to 2 for silicon, 0 to 1.5 for aluminum, 0 to 1 for magnesium, 0 to 1 for calcium, 0 to 0.5 for potassium, 0 to 2 for tin, 0 to 0.5 for sodium, 0 to 1.5 for boron, 0 to 2 for titanium, 0 to 1 for lead, 0 to 2 for zirconium, and 0 to 1.5 for yttrium. It is noted that x=0 means a complete metal which is not transparent at all and not usable, suggesting 0 < x. The upper limit of x corresponds to complete oxidation.

The inorganic oxide thin-film layer has a thickness which is desirably selected in the range of 50 to 2,000 Å, more preferably 100 to 1,000 Å, although the thickness varies with the type of metal or metal oxide. The inorganic oxide thin-film layer may be formed by vapor deposition using any inorganic oxide materials including one or more metals, one or more metal oxides (a mixture of metal oxides), and a mixture of a metal oxide(s) with a different material(s).

No particular limits are imposed on the method for producing the gas barrier laminate. Any well-known techniques of forming coatings or laminating thin films on substrates may be used. It is acceptable to lay a plurality of functional thin films having desired properties one on top of another, to form a laminate by joining films together if the substrate is a film, or to form a multilayer structure by extrusion lamination. The preferred technique of forming a functional layer is coating when the layer is of organic material, and coating and/or vapor deposition when the layer is of inorganic material.

One typical method for producing a gas barrier laminate is described. First, a thin-film layer of inorganic oxide is formed on a substrate by a vapor deposition technique as described above. The gas barrier composition is coated onto the thin-film layer, heated at a selected temperature for drying and heat curing, and optionally aged to form a gas barrier film. Thereafter, an organic or inorganic top-coating composition is coated onto the gas barrier film, heated at a selected temperature for drying and heat curing, and optionally aged to form a top layer. This method is advantageous in that the overall production time is relatively short and the adhesion or affinity of the gas barrier film to the top layer is enhanced.

No particular limits are imposed on the methods for coating the gas barrier composition and the organic or inorganic top-coating composition onto a substrate. Any well-known techniques of forming thin films on substrates may be used. Employable are coating techniques such as roll coating, dip coating, bar coating, nozzle coating, die coating, spray coating, spin coating, curtain coating, and flow coating, and printing techniques such as screen printing, gravure coating, and curved surface printing, and combinations thereof.

The inorganic oxide layer between the substrate and the gas barrier film is formed by vapor deposition or evaporation. In some cases, the inorganic top layer may also be formed by evaporation.

With respect to the gas barrier properties of the gas barrier laminate, the required criterion differs depending on the intended application and also varies with the type of substrate and the overall laminate structure. For use as food and beverage containers and wrapping films, for example, the gas barrier laminate typically has a gas transmission rate of up to 30 ml/m²·24hrs·atm, preferably up to 20 ml/m²·24hrs·atm, more preferably up to 10 ml/m²·24hrs·atm, under humid conditions (20°C, 90%RH). The gas transmission in this range clears the gas barrier criterion required of food and beverage containers and wrapping films.

With respect to the Gelbo flex durability, the required criterion differs depending on the intended application and also varies with the type of substrate and the overall laminate structure. For use as food and beverage containers and wrapping films, for example, the gas barrier laminate should preferably meet the Gelbo flex test criterion that the oxygen transmission rate after 50 cycles of repeated twist by a Gelbo flex tester at 20°C is up to 2 times that before the test.

### EXAMPLE

Synthesis Examples, Examples and Comparative Examples are given below for further illustrating the invention although the invention is not limited to the Examples. In Examples, IR indicates infrared spectroscopy, Me is methyl, and parts are by weight. The tests for evaluating a gas barrier laminate are as follows.

### Oxygen transmission rate

Measured under conditions: temperature 20°C and humidity 40%RH, and temperature 20°C and humidity 90%RH, by an instrument Ox-tran^{®} (Mocon, USA).

### Gelbo flex durability

A laminate sample was subjected to 50 cycles of twist by a Gelbo flex tester, before an oxygen transmission rate thereof was similarly measured at temperature 20°C and humidity 90%RH.

First described is the synthesis of an organopolysiloxane having a triazine-thiol radical in a molecule which is an essential component in the gas barrier composition of the invention.

### Synthesis Example 1

A 1-L separable flask equipped with a thermometer and water-cooled condenser was charged with 40.0 g (amine equivalent 857) of an amino-containing silicone oligomer having the siloxane unit formula (3) below, 8.27 g of triazine trithiol, and 360 g of toluene. With stirring, the mixture was heated at 120°C for 4 hours to drive reaction. With a progress of reaction, the mixture built up its viscosity. The reaction reached completion when the viscosity buildup ceased. The solvent was distilled off in vacuum, and the hydrogen sulfide formed was also removed. The resulting reaction product was a pale yellow cloudy wax-like mass. On analysis of the product by IR spectroscopy, the absorption peak assigned to N-H structure was reduced and the absorption peak assigned to triazine-thiol structure was newly observed, as compared with the spectrum prior to reaction. It was confirmed that the desired reaction took place in an ideal manner. The product was identified to be an organopolysiloxane having triazine-thiol and alkenyl radicals represented by the unit formula (4).

[MeSiO_{3/2}]_{0.9}[R¹SiO_{3/2}]₀.₁[O_{1/2}Me]_{0.33} (3)

[MeSiO_{3/2}]_{0.9}[R²SiO_{3/2}]_{0.1}[O_{1/2}Me]_{0.33} (4)

R¹: H₂NC₃H₆-
R²: 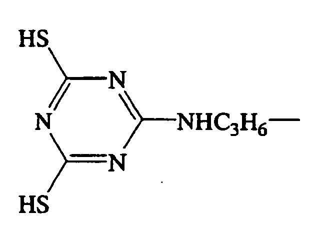
Me = methyl

### Synthesis Example 2

A 1-L separable flask equipped with a thermometer and water-cooled condenser was charged with 100.0 g (amine equivalent 881) of a vinyl/amino-containing silicone oligomer having the siloxane unit formula (5) below, 20.1 g of triazine trithiol, and 250 g of toluene. With stirring, the mixture was heated at 120°C for 4 hours to drive reaction. With a progress of reaction, the mixture built up its viscosity. The reaction reached completion when the viscosity buildup ceased. The solvent was distilled off in vacuum, and the hydrogen sulfide formed was also removed. The resulting reaction product was a pale yellow cloudy wax-like mass. On analysis of the product by IR spectroscopy, the absorption peak assigned to N-H structure was reduced and the absorption peak assigned to triazine-thiol structure was newly observed, as compared with the spectrum prior to reaction. It was confirmed that the desired reaction took place in an ideal manner. The product was identified to be an organopolysiloxane having triazine-thiol and alkenyl radicals represented by the unit formula (6).

[MeSiO_{3/2}]_{0.8}[(CH₂=CH)SiO_{3/2}]_{0.1}[R¹SiO_{3/2}]_{0.1}[O_{1/2}Me]_{0.33} (5)

[MeSiO_{3/2}]_{0.8}[(CH₂=CH)SiO_{3/2}]_{0.1}[R²SiO_{3/2}]_{0.1}[O_{1/2}Me] _{0.33} (6)

R¹: H₂NC₃H₆-
R²: 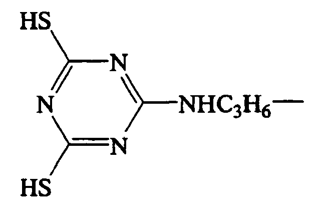
Me = methyl

### Synthesis Example 3

A 1-L separable flask equipped with a thermometer and water-cooled condenser was charged with 100.0 g (amine equivalent 6,299) of a vinyl/amino-containing silicone oil having the siloxane unit formula (7) below, 2.8 g of triazine trithiol, and 250 g of toluene. With stirring, the mixture was heated at 120°C for 4 hours to drive reaction. With a progress of reaction, the mixture built up its viscosity. The reaction reached completion when the viscosity buildup ceased. The solvent was distilled off in vacuum, and the hydrogen sulfide formed was also removed. The resulting reaction product was a pale yellow cloudy wax-like mass. On analysis of the product by IR spectroscopy, the absorption peak assigned to N-H structure was reduced and the absorption peak assigned to triazine-thiol structure was newly observed, as compared with the spectrum prior to reaction. It was confirmed that the desired reaction took place in an ideal manner. The product was identified to be an organopolysiloxane having triazine-thiol and alkenyl radicals represented by the unit formula (8).

(CH₂=CH)Me₂SiO_{1/2}1_{0.007}[Me₂SiO_{2/2}]_{0.934}[(CH₂=CH)MeSiO_{2/2}]_{0.050}[R¹MeSiO_{2/2}]_{0.009} (7)

(CH₂=CH)Me₂SiO_{1/2}]_{0.007}[Me₂SiO_{2/2}]_{0.934}[(CH₂=CH)MeSiO_{2/2}]_{0.050}[R²MeSiO_{2/2}]_{0.009} (8)

R¹: H₂NC₃H₆-
R²: 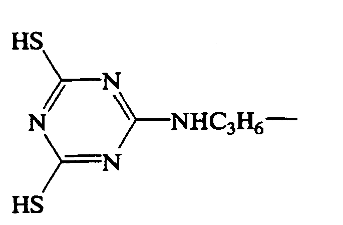
Me = methyl

### Example 1

A coating solution #1 was prepared by combining and stirring 10 parts of the organopolysiloxane in Synthesis Example 1 with 5 parts of polyvinyl alcohol and 85 parts of isopropyl alcohol, adding 1 part of a 1 wt% acetic acid aqueous solution thereto, and heating at 60°C for 3 hours for reaction.

### Example 2

A coating solution #2 was prepared by combining and stirring 10 parts of the organopolysiloxane in Synthesis Example 2 with 5 parts of polyvinyl alcohol and 85 parts of isopropyl alcohol, adding 1 part of a 1 wt% acetic acid aqueous solution thereto, and heating at 60°C for 3 hours for reaction.

### Example 3

A coating solution #3 was prepared by combining and stirring 10 parts of the organopolysiloxane in Synthesis Example 3 with 5 parts of polyvinyl alcohol and 85 parts of isopropyl alcohol, adding 1 part of a 1 wt% acetic acid aqueous solution thereto, and heating at 60°C for 3 hours for reaction.

### Example 4

A film of saponified ethylene-vinyl ester copolymer having a thickness of 15 µm was prepared as a substrate. Onto this base film, coating solution #1 in Example 1 was coated in such an amount as to give a dry thickness of 1 µm, dried at 100°C for 10 seconds, and aged at 60°C for 2 days to form a gas barrier layer. Onto the gas barrier layer, an aqueous emulsion of amino-containing acrylic resin was coated in such an amount as to give a dry thickness of 1 µm, dried at 100°C for 20 seconds, and aged at 60°C for 1 day to form a gas barrier laminate #11.

### Example 5

A gas barrier laminate #12 was prepared by the same procedure as in Example 4 except that coating solution #1 was replaced by coating solution #2 in Example 2.

### Example 6

A gas barrier laminate #13 was prepared by the same procedure as in Example 4 except that coating solution #1 was replaced by coating solution #3 in Example 3.

### Example 7

A film of saponified ethylene-vinyl ester copolymer having a thickness of 15 µm was prepared as a substrate. Onto this base film, a silicon oxide film was deposited to a thickness of 20 nm. The deposition conditions included reactant gas feed of hexamethyldisiloxane, oxygen and helium in flow rate ratio = 1.2 : 5.0 : 2.5 (in standard liter per minute), ultimate pressure = 5.0×10⁻⁵ mbar, film deposition pressure = 7.0×10⁻² mbar, line speed = 150 m/min, and power = 35 kW. The silicon oxide film thus deposited was plasma treated for surface activation. Coating solution #1 in Example 1 was coated thereon in such an amount as to give a dry thickness of 1 µm, dried at 100°C for 10 seconds, and aged at 60°C for 2 days to form a gas barrier layer. Onto the gas barrier layer, an aqueous emulsion of amino-containing acrylic resin was coated in such an amount as to give a dry thickness of 1 µm, dried at 100°C for 20 seconds, and aged at 60°C for 1 day to form a gas barrier laminate #14.

### Example 8

A gas barrier laminate #15 was prepared by the same procedure as in Example 7 except that coating solution #1 was replaced by coating solution #2 in Example 2.

### Example 9

A gas barrier laminate #16 was prepared by the same procedure as in Example 7 except that coating solution #1 was replaced by coating solution #3 in Example 3.

### Comparative Example 1

A gas barrier laminate #17 was prepared by the same procedure as in Example 4 except that coating solution #1 used in Example 4 was replaced by a similar coating solution consisting of polyvinyl alcohol as the effective component.

### Comparative Example 2

A gas barrier laminate #18 was prepared by the same procedure as in Example 7 except that coating solution #1 used in Example 7 was replaced by a similar coating solution consisting of polyvinyl alcohol as the effective component.

### Experiment

Gas barrier laminates #11 to #18 prepared in Examples 4 to 9 and Comparative Examples 1, 2 were measured for an oxygen transmission rate before and after the Gelbo flex test. Table 1 reports measured data of oxygen transmission rate, and Table 2 reports changes of oxygen transmission rate by the Gelbo flex test.

**Table 1**

| | Oxygen transmission rate (ml/m²·24hrs·atm) | |
|---|---|---|
| Measurement conditions | 20°C, 40%RH | 20°C, 90%RH |
| Example 4 | 0.7 | 1.3 |
| Example 5 | 0.8 | 1.3 |
| Example 6 | 0.6 | 1.4 |
| Example 7 | 0.03 | 0.07 |
| Example 8 | 0.02 | 0.04 |
| Example 9 | 0.03 | 0.05 |
| Comparative Example 1 | 8.1 | 10.2 |
| Comparative Example 2 | 1.1 | 2.4 |

**Table 2**

| | Oxygen transmission rate (ml/m²·24hrs·atm) | |
|---|---|---|
| Measurement conditions | 20°C, 90%RH | |
| Twist cycles | Before test (0 cycle) | After test (50 cycles) |
| Example 4 | 1.3 | 1.4 |
| Example 5 | 1.3 | 1.4 |
| Example 6 | 1.4 | 1.4 |
| Example 7 | 0.07 | 0.07 |
| Example 8 | 0.04 | 0.05 |
| Example 9 | 0.05 | 0.06 |
| Comparative Example 1 | 10.2 | 15.4 |
| Comparative Example 2 | 2.4 | 6.3 |

The test results demonstrate that gas barrier compositions, gas barrier layers formed by coating the compositions, and gas barrier laminates within the scope of the invention exhibit satisfactory gas barrier properties and are improved in flexing resistance and Gelbo flex durability due to the enhanced adhesion to substrates.

## Claims

1. A composition suitable for forming a gas barrier and comprising
(A) organopolysiloxane having a triazine-thiol radical in the molecule, and
(B) organic polymer having a polar functional radical.

2. A gas barrier composition of claim 1 wherein the polar functional radical of organic polymer (B) is selected from hydroxyl, carboxyl, amino, amide, isocyanate, mercapto, epoxy and alkoxysilyl.

3. A gas barrier composition of claim 2 in which the organic polymer (B) is selected from polyvinyl alcohol, ethylene-vinyl alcohol copolymers, (co)polymers of hydroxyl-containing (meth)acrylate, polyalkylene imines, polyalkyl amines, homopolymers of amino-containing (meth)acrylates, copolymers of amino-containing (meth)acrylates with other (meth)acrylates or with (meth)acrylic acid, polyoxyethylene alkylamines, homopolymers of alkoxysilyl-containing (meth)acrylates, copolymers of alkoxysilyl-containing (meth)acrylates with other (meth)acrylates or with (meth)acrylic acid, polyacrylamide, poly(meth)acrylic acid, (meth)acrylic acid copolymers.

4. A gas barrier composition of any one of claims 1 to 3 in which the organic polymer (B) has a number average molecular weight (Mn) of 300 to 10,000 as measured by gel permeation chromatography (GPC) versus polystyrene standards,

5. A gel barrier composition according to any one of the preceding claims comprising the reaction product of (A) and (B).

6. A gas barrier composition of any one of the preceding claims wherein components (A) and (B) are used in a weight ratio of 10-95 : 90-5.

7. A gas barrier composition of any one of the preceding claims wherein the organopolysiloxane (A) having a triazine-thiol radical in a molecule has the siloxane unit formula (1):
(R¹R²R³SiO_{1/2})ₐ(R⁴R⁵SiO_{2/2})_{b}(R⁶SiO_{1/2})_{c}(SiO_{4/2})_{d}(O_{1/2x})ₑ (1)
wherein X is hydrogen or C₁-C₄ alkyl,
R¹ to R⁶ are each independently an optionally substituted C₁-C₂₀ alkyl or alkenyl radical or C₆-C₁₀ aromatic hydrocarbon radical, with the proviso that any one of R¹ to R⁶ contains at least one radical of the structural formula (2): 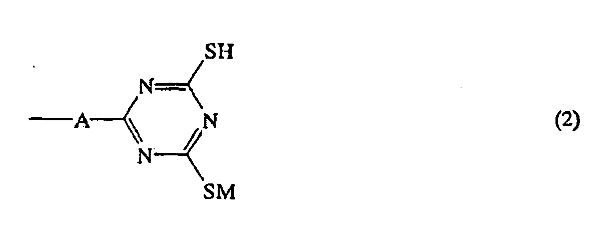
wherein M is hydrogen and/or sodium, A is a divalent organic radical having one end bonded to the triazine ring and another end bonded to a silicon atom in the polysiloxane,
a is a number 0 ≤ a < 0.8 on average, b is a number 0 ≤ b < 1 on average, c is a number 0 ≤ c ≤ 1 on average, d is a number 0 ≤ d < 0.4 on average, e is a number 0 ≤ e < 0.5 on average and a+b+c+d = 1.

8. A gas barrier composition of claim 7 wherein in structural formula (2), the divalent organic radical -A- is a divalent hydrocarbon radical which may be separated by carbonyl carbon and/or a heteroatom selected from oxygen, sulfur and nitrogen.

9. A gas barrier composition of claim 8 wherein in structural formula (2), the divalent organic radical -A- is -CH₂CH₂CH₂NH- or - CH₂CH₂CH₂NHCH₂CH₂NH-.

10. A gas barrier laminate comprising a substrate and a gas barrier layer formed thereon by coating with a composition comprising (A) organopolysiloxane having a triazine-thiol radical in the molecule.

11. A gas barrier laminate of claim 10 in which said composition is in accordance with any one of claims 1 to 9.

12. A gas barrier laminate of claim 10 or 11 comprising a top layer of organic and/or inorganic polymer disposed on the gas barrier layer.

13. A gas barrier laminate of claim 10, 11 or 12 comprising an inorganic thin-film layer between the substrate and the gas barrier layer.

14. A gas barrier laminate of any one of claims 10 to 13 wherein the substrate is a film.

15. A gas barrier laminate of claim 14 wherein the film substrate is of a material selected from polyester resins, ethylene-vinyl alcohol copolymers, vinylidene chloride copolymers, aromatic nylon resins, and ethylene-vinyl ester copolymers and saponified derivatives thereof.

16. A shaped article comprising a gas barrier laminate of any one of claims 10 to 15.

## Patentansprüche

1. Zusammensetzung, die geeignet ist zur Bildung einer Gassperre und die umfasst:
(A) Organpolysiloxan mit einem Triazinthiol-Rest im Molekül und
(B) organisches Polymer mit einem polaren funktionellen Rest.

2. Gassperrzusammensetzung nach Anspruch 1, worin der polare funktionelle Rest des organischen Polymers (B) aus Hydroxyl, Carboxyl, Amino, Amid, Isocyanat, Mercapto, Epoxy und Alkoxysilyl ausgewählt ist.

3. Gassperrzusammensetzung nach Anspruch 2, worin das organische Polymer (B) aus Polyvinylalkohol, Ethylen-Vinylalkohol-Copolymeren, (Co-)Polymeren von hydroxylhältigen (Meth)acrylaten, Polyalkyleniminen, Polyalkylaminen, Homopolymeren von aminohältigen (Meth)acrylaten, Copolymeren von aminohältigen (Meth)acrylaten mit anderen (Meth)acrylaten oder mit (Meth)acrylsäure, Polyoxyethylenalkylaminen, Homopolymeren von alkoxysilylhältign (Meth)acrylaten, Copolymeren von alkoxysilylhältigen (Meth)acrylaten mit anderen (Meth)acrylaten oder mit (Meth)acrylsäure, Polyacrylamid, Poly(meth)acrylsäure, (Meth)acrylsäure-Copolymeren ausgewählt ist.

4. Gassperrzusammensetzung nach einem der Ansprüche 1 bis 3, worin das organische Polymer (B) eine mittels Gelpermeationschromatographie (GPC) mit Polystyrolstandards gemessenes gewichtsmittleres Molekulargewicht (Mn) von 300 bis 10.000 aufweist.

5. Gassperrzusammensetzung nach einem der vorangegangenen Ansprüche, die das Reaktionsprodukt von (A) und (B) umfasst.

6. Gassperrzusammensetzung nach einem der vorangegangenen Ansprüche, worin die Komponenten (A) und (B) in einem Gewichtsverhältnis von 10-95 : 90-5 eingesetzt sind.

7. Gassperrzusammensetzung nach einem der vorangegangenen Ansprüche, worin das Organpolysiloxan (A) mit einem Triazinthiol-Rest im Molekül eine Siloxaneinheit der Formel (1) aufweist:
(R¹R²R³SiO_{1/2})ₐ(R⁴R⁵SiO_{2/2})_{b}(R⁶SiO_{3/2})_{c}(SiO_{4/2})_{d}(O_{1/2x})ₑ (1)
worin: X Wasserstoff oder C₁-C₄-Alkyl ist,
R¹ bis R⁶ jeweils unabhängig voneinander ein gegebenenfalls substituierter C₁-C₂₀-Alkyl- oder Alkenylrest oder ein aromatischer C₆-C₁₀-Kohlenwasserstoffrest sind, mit der Maßgabe, dass einer von R₁ bis R₆ zumindest einen Rest der Strukturformel (2) enthält: 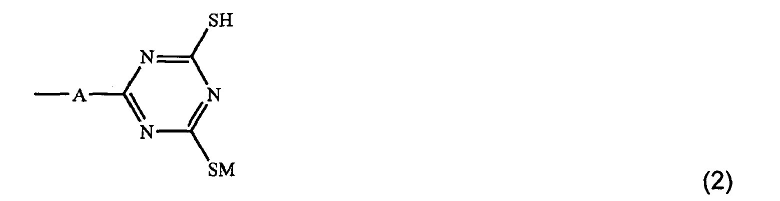 worin M Wasserstoff und/oder Natrium ist, A ein zweiwertiger organischer Rest, von dem ein Ende an den Triazinring gebunden ist und das andere Ende an ein Siliciumatom im Polysiloxan gebunden ist,
a im Durchschnitt eine Zahl von 0 ≤ a < 0,8 ist, b im Durchschnitt eine Zahl von 0 ≤ b < 1 ist, c im Durchschnitt eine Zahl von 0 ≤ c ≤ 1 ist, d im Durchschnitt eine Zahl von 0 ≤ d < 0,4 ist, e im Durchschnitt eine Zahl von 0 ≤ e < 0,5 ist und a+b+c+d = 1 ist.

8. Gassperrzusammensetzung nach Anspruch 7, worin in der Strukturformel (2) der zweiwertige organische Rest -A- ein zweiwertiger Kohlenwasserstoffrest ist, der von einem Carbonylkohlenstoff- und/oder einem aus Sauerstoff, Schwefel und Stickstoff ausgewählten Heteroatom unterbrochen sein kann.

9. Gassperrzusammensetzung nach Anspruch 8, worin der zweiwertige organische Rest -A- in der Strukturformel (2) -CH₂CH₂CH₂NH- oder -CH₂CH₂CH₂NH-CH₂CH₂NH- ist.

10. Gassperrlaminat, das ein Substrat und eine Gassperrschicht umfasst, die darauf durch Beschichtung mit einer Zusammensetzung ausgebildet ist, die (A) Organopolysiloxan mit einem Triazinthiol-Rest im Molekül umfasst.

11. Gassperrlaminat nach Anspruch 10, in dem die Zusammensetzung einem der Anspruche 1 bis 9 entspricht.

12. Gassperrlaminat nach Anspruch 10 oder 11, das eine Deckschicht aus organischem und/oder anorganischem Polymer aufweist, die auf der Gassperrschicht abgelagert ist.

13. Gassperrlaminat nach Anspruch 10, 11 oder 12, das eine anorganische Dünnfilmschicht zwischen dem Substrat und der Gassperrschicht umfasst.

14. Gassperrlaminat nach einem der Ansprüche 10 bis 13, worin das Substrat eine Folie ist.

15. Gassperrlaminat nach Anspruch 14, worin das Foliensubstrat aus einem Material besteht, das aus Polyesterharzen, Ethylen-Vinylalkohol-Copolymeren, Vinylidenchlorid-Polymeren, aromatischen Nylonharzen und Ethylen-Vinylester-Copolymeren sowie verseiften Derivativen davon ausgewählt ist.

16. Formteil, das ein Gassperrlaminat nach einem der Ansprüche 10 bis 15 umfasst.

## Revendications

1. Composition apte à former une barrière aux gaz et comprenant
(A) de l'organopolysiloxane ayant un radical de triazine-thiol dans la molécule, et
(B) un polymère organique ayant un radical fonctionnel polaire.

2. Composition barrière aux gaz selon la revendication 1, dans laquelle le radical fonctionnel polaire du polymère organique (B) est sélectionné parmi hydroxyle, carboxyle, amino, amide, isocyanate, mercapto, époxy et alcoxysilyle.

3. Composition barrière aux gaz selon la revendication 2, dans laquelle le polymère organique (B) est sélectionné parmi l'alcool polyvinylique, des copolymères d'éthylène-alcool vinylique, des copolymères de (meth)acrylate contenant de l'hydroxyle, des polyalkylène imines, polyalkyl amines, homopolymères de (meth)acrylates contenant amino, des copolymères de (meth)acrylates contenant amino avec d'autres (meth)acrylates ou avec l'acide (meth)acrylique, des polyoxyéthylène alkylamines, homopolymères de (meth)acrylate contenant de l'alcoxysilyle, des copolymères de (meth)acrylate contenant de l'acoxysilyle avec d'autres (meth)acrylates ou avec de l'acide (meth)acrylique, polyacrylamide, acide poly(meth)acrylique, copolymères de l'acide (meth)acrylique.

4. Composition barrière aux gaz selon l'une quelconque des revendications 1 à 3, dans laquelle le polymère organique (B) possède une masse moléculaire moyenne en nombre (Mn) de 300 à 10 000 mesurée par une chromatographie de perméation sur gel (GPC) versus des standards de polystyrène.

5. Composition barrière aux gaz selon l'une quelconque des revendications précédentes, comprenant le produit de réaction de (A) et (B).

6. Composition barrière aux gaz selon l'une quelconque des revendications précédentes, où les composants (A) et (B) sont utilisés dans un rapport pondéral de 10-95: 90-5.

7. Composition barrière aux gaz selon l'une quelconque des revendications précédentes, dans laquelle l'organopolysiloxane (A) ayant un radical de triazine-thiol dans une molécule présente la formule unitaire de siloxane (1) :
(R¹R²R³SiO_{1/2})ₐ(R⁴R⁵SiO_{2/2})_{b}(R⁶SiO_{3/2})_{c}(SiO_{4/2})_{d}(O_{1/2x})ₑ (1)
où X est hydrogène ou alkyle C₁-C₄,
R¹ à R⁶ sont chacun indépendamment un alkyle C₁-C₂₀ optionnellement substitué ou un radical alkényle ou un radical d'hydrocarbure aromatique C₆-C₁₀ à condition que l'un quelconque parmi R₁ à R₆ contienne au moins un radical de la formule structurelle (2): 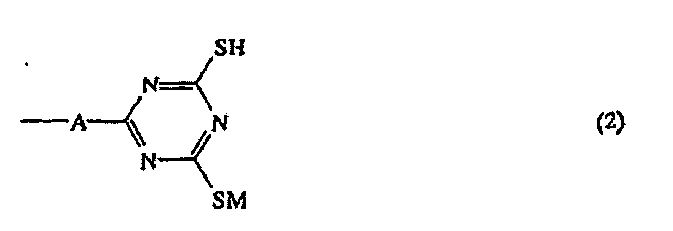
où M est hydrogène et/ou sodium, A est un radical organique divalent ayant une extrémité liée au cycle de triazine et une autre extrémité liée à un atome de silicium dans le polysiloxane,
a est un nombre 0 ≤ a < 0,8 en moyenne, b est un nombre 0 ≤ b < 1 en moyenne, c est un nombre 0 ≤ c ≤ 1 en moyenne, d est un nombre 0 ≤ d < 0,4 en moyenne, e est un nombre 0 ≤ e < 0,5 en moyenne et a+b+c+d = 1.

8. Composition barrière aux gaz selon la revendication 7, dans laquelle dans la formule structurelle (2), le radical organique divalent -A- est un radical d'hydrocarbure divalent qui peut être séparé par un carbonyl carbone et/ou un hétéroatome sélectionné parmi oxygène, soufre et azote.

9. Composition barrière aux gaz selon la revendication 8, dans laquelle dans la formule structurelle (2), le radical organique divalent -A- est -CH₂CH₂CH₂NH- ou -CH₂CH₂CH₂NHCH₂CH₂NH-.

10. Laminé formant barrière aux gaz comprenant un substrat et une couche barrière aux gaz formée sur celui-ci par le revêtement avec une composition comprenant (A) de l'organopolysiloxane ayant un radical de triazine-thiol dans la molécule.

11. Laminé formant barrière aux gaz selon la revendication 10, dans laquelle ladite composition est en accord avec l'une quelconque des revendications 1 à 9.

12. Laminé formant barrière aux gaz selon la revendication 10 ou 11, comprenant une couche supérieure en polymère organique et/ou inorganique disposée sur la couche formant barrière aux gaz.

13. Laminé formant barrière aux gaz selon la revendication 10, 11 ou 12, comprenant une couche de film mince inorganique entre le substrat et la couche formant barrière aux gaz.

14. Laminé formant barrière aux gaz selon l'une quelconque des revendications 10 à 13, dans lequel le substrat est un film.

15. Laminé formant barrière aux gaz selon la revendication 14, où le substrat du film est en un matériau sélectionné parmi des résines de polyester, des copolymères d'éthylène-alcool vinylique, des copolymères de vinylidène chlorure, des résines de nylon aromatiques et des copolymères d'éthylène-ester vinylique et des dérivés saponifiés de ceux-ci.

16. Article formé comprenant un laminé formant barrière aux gaz selon l'une quelconque des revendications 10 à 15.
